# FASCICULE DE BREVET EUROPEEN

(11) **EP 4 112 144 B1**
(45) Date de publication et mention de la délivrance du brevet: **29.11.2023**
(21) Numéro de dépôt: 22177594.3
(22) Date de dépôt: 07.06.2022
(51) Int. Cl.: A63G 27/00, A63G 27/02

(54) **INSTALLATION DE GRANDE ROUE COMPORTANT UNE STRUCTURE DE GUIDAGE DE NACELLES PRÉSENTANT DES LIAISONS À ROTULE GLISSANTE**
RIESENRADANLAGE MIT EINER GONDELFÜHRUNGSSTRUKTUR MIT GLEITKUGELGELENKVERBINDUNGEN
LARGE-WHEEL INSTALLATION COMPRISING A STRUCTURE FOR GUIDING NACELLES HAVING SLIDING BALL-AND-SOCKET JOINT LINKS

(30) Priorité: 30.06.2021 FR 2107098
(43) Date de publication de la demande: 04.01.2023
(73) Titulaire: POMA, 38340 Voreppe (FR)
(72) Inventeur: MUGNIER, Jean-François, 38340 Voreppe (FR)
(74) Mandataire: Alatis

(56) Documents cités:
- WO-A1-2012/140330
- FR-A1- 3 088 014
- JP-A- 2002 143 569
- JP-A- 2002 355 446
- JP-A- 2010 005 316

## Description

### DOMAINE TECHNIQUE DE L'INVENTION

La présente invention a trait à une installation de grande roue comprenant une structure de jante, mobile en rotation autour d'un axe de révolution horizontal, et au moins une nacelle liée à la structure de jante par l'intermédiaire d'une structure de guidage pour tourner par rapport à la structure de jante autour d'un axe de rotation parallèle à l'axe de révolution de la structure de jante et distant de l'axe de révolution de la structure de jante, le plus souvent en vue de maintenir l'assiette de la nacelle lors de la révolution de la jante.

### ÉTAT DE LA TECHNIQUE ANTÉRIEURE

Dans le document DE476892 est décrite une telle installation, qui comprend des nacelles, chacune guidée en rotation par rapport à la jante de la grande roue au moyen d'un roulement de grand diamètre entourant la nacelle.

Le WO2012/140330 décrit un dispositif pour le montage des nacelles utilisées dans ces installations. Ce dispositif comprend une couronne extérieure solidaire de la jante de la grande roue et une couronne intérieure rotative solidaire de la nacelle. Ces deux couronnes peuvent tourner l'une par rapport à l'autre grâce à un roulement intercalaire. La couronne extérieure possède trois oreilles coplanaires et angulairement décalées qui assurent le support de la nacelle à la jante.

Pour des installations de plus grandes dimensions, destinées à accueillir un grand nombre de passagers, on peut prévoir de guider les nacelles en rotation par rapport à la jante à l'aide de deux roulements coaxiaux de grands diamètres espacés l'un de l'autre, comme décrit par exemple dans le document FR3088014.

Lorsque le ou les roulements d'une nacelle sont reliés à la jante de la grande roue par plusieurs points d'ancrage, il existe des risques de défauts d'alignement de l'axe de rotation de la nacelle par rapport à l'axe de révolution de la jante de la grande roue, ou, dans le cas de nacelles guidées par deux roulements, un risque de défaut d'alignement des axes de rotation des deux roulements. De tels défauts d'alignement génèrent des contraintes et des usures préjudiciables à la longévité de l'installation. Or, corriger ces défauts d'alignement durant l'assemblage des nacelles sur la jante de la grande roue est fastidieux et particulièrement délicat, étant donné les dimensions de l'appareillage.

Les difficultés sont encore accrues lorsque le montage des nacelles est envisagé lors d'une rénovation d'une installation, dont la jante de la grande roue préexistante ne répond pas nécessairement au même cahier des charges que les nacelles en termes de tolérances dimensionnelles, et peut avoir travaillé lors des périodes de service antérieures.

Des défauts d'alignement peuvent également être rencontrés postérieurement à l'assemblage du fait, par exemple, des déformations de la jante de la grande roue au cours du temps, qu'elles soient permanentes et dues au vieillissement, ou cycliques, du fait des dilatations thermiques notamment.

### EXPOSÉ DE L'INVENTION

Dans ce contexte, l'invention a pour but de proposer une solution technique permettant de limiter les contraintes engendrées au niveau de l'interface entre nacelles et jante de grande roue.

Ce but est atteint selon l'invention au moyen d'une installation de grande roue comprenant une structure de jante mobile en rotation autour d'un axe de révolution horizontal, et au moins une nacelle qui est liée à la structure de jante par l'intermédiaire d'une structure de guidage comportant au moins un roulement. Cette structure de guidage permet de à la nacelle de tourner par rapport à la structure de jante autour d'un axe de rotation parallèle ou sensiblement parallèle à l'axe de révolution de la structure de jante et distant de l'axe de révolution de la structure de jante.

Selon l'invention, le roulement est lié à la structure de jante par deux liaisons à rotule glissante ayant des axes de glissement parallèles l'un à l'autre et distants l'un de l'autre. Par liaison à rotule glissante, on entend une liaison offrant trois degrés de liberté de rotation et un degré de liberté de translation. Les liaisons à rotule glissante confèrent au roulement une liberté de positionnement et d'orientation dans l'espace par rapport à la structure de jante, de sorte que la rotation de la nacelle par rapport à la structure de jante n'induit pas de contraintes importantes à l'interface entre le roulement et la structure de jante.

En pratique, le roulement comporte au moins deux pistes de roulement opposées guidées l'une par rapport à l'autre en rotation autour de l'axe de rotation du roulement, une première des deux pistes de roulement étant solidaire de la nacelle et une deuxième des deux pistes étant solidaire d'un support lié à la structure de jante par les liaisons à rotule glissante. Les pistes de roulement peuvent être formées par des bagues de roulement monobloc ou en plusieurs pièces. Selon un mode de réalisation, la première des deux pistes de roulement est une piste extérieure du roulement tandis que la deuxième des deux pistes de roulement est une piste intérieure du roulement. L'inverse est également possible.

En pratique, il existe une position de référence de la structure de guidage, dans laquelle l'axe de rotation du roulement est parallèle aux axes de glissement des liaisons à rotule glissantes. De préférence, l'axe de rotation du roulement est équidistant des axes de glissement dans la position de référence.

Les deux liaisons à rotule confèrent ensemble une liberté de mouvement au roulement par rapport à la structure de jante. De préférence :
- le roulement en première position de contact est libre de pivoter autour d'un axe de basculement coplanaire avec les axes de glissement et perpendiculaire aux axes de glissement et/ou
- le roulement en première position de contact est libre de pivoter autour d'un axe de pivotement sécant avec l'axe de rotation de la nacelle. Ce mouvement s'accompagne en pratique d'une translation des liaisons à rotule glissante dans des sens axiaux opposés.

Suivant un mode de réalisation, la structure de guidage comporte un dispositif de butée qui comporte au moins une première butée solidaire du roulement en regard d'une première contrebutée solidaire de la structure de jante, la première butée et la première contrebutée étant, dans une première position de contact, en contact l'une avec l'autre suivant une première zone de contact pour limiter un mouvement de translation du roulement par rapport à la structure de jante parallèlement aux axes de glissement dans un premier sens de translation.

La première butée permet une transmission des efforts de la nacelle à la structure de jante, notamment d'efforts dus au vent.

La première zone de contact est située de préférence à moins de 10cm d'un plan contenant les axes de glissement et/ou à moins de 10cm d'un plan médian entre les deux axes de glissement.

Suivant un mode de réalisation, le dispositif de butée comporte au moins une deuxième butée solidaire du roulement en regard d'une deuxième contrebutée solidaire de la structure de jante, la deuxième butée et la deuxième contrebutée étant, dans une deuxième position de contact, en contact suivant une deuxième zone de contact pour limiter un mouvement de translation du roulement par rapport à la structure de jante parallèlement aux axes de glissement dans un deuxième sens de translation opposé au premier sens de translation.

Suivant un mode de réalisation, le dispositif de butée permet une translation du roulement par rapport à la structure de jante parallèlement à l'axe de rotation de la nacelle avec un débattement axial entre la première position de contact et la deuxième position de contact. Suivant un mode de réalisation alternatif, la première position de contact est confondue avec la deuxième position de contact et le dispositif de butée interdit toute translation du roulement par rapport à la structure de jante parallèlement à l'axe de rotation de la nacelle.

Selon un mode de réalisation de l'invention, chaque liaison à rotule glissante comprend une rotule lisse. Selon une autre mode de réalisation, chaque liaison à rotule glissante comporte une rotule à roulement, par exemple un roulement sphérique.

Selon un mode de réalisation, que la structure de jante comporte deux flasques parallèles délimitant un logement intercalaire dans lequel sont logées une portion d'un support solidaire du roulement et les deux liaisons à rotule glissante. Préférentiellement, les deux flasques appartiennent à une platine commune fixée à une jante de la structure de jante. La ou les contrebutées limitant les mouvements de translation du roulement sont de préférence solidaires de cette platine commune.

Suivant un mode de réalisation, la structure de guidage comporte au moins un roulement supplémentaire définissant un axe de rotation supplémentaire, le roulement supplémentaire solidaire de la nacelle et lié à la structure de jante, de préférence par deux liaisons à rotule glissante supplémentaires ayant des axes de glissement parallèles et distants l'un de l'autre, le roulement supplémentaire étant à une distance du roulement, mesurée parallèlement à l'axe de rotation de la nacelle, supérieure à 1 mètre.

En pratique, le roulement supplémentaire comporte au moins deux pistes de roulement supplémentaires opposées guidées l'une par rapport à l'autre en rotation autour de l'axe de rotation du roulement supplémentaire, une première des deux pistes de roulement supplémentaires étant solidaire de la nacelle et une deuxième des deux pistes de roulement supplémentaires étant solidaire d'un support lié à la structure de jante par les liaisons à rotule glissante supplémentaires.

De préférence, les axes de glissement des deux liaisons à rotule glissante supplémentaires sont parallèles à l'axe de rotation du roulement supplémentaire. De préférence, les axes de glissement des deux liaisons à rotule glissante supplémentaires sont confondus chacun avec l'un des axes de glissement des deux liaisons à rotule glissante, aux tolérances de fabrication près.

Les deux liaisons à rotule supplémentaires confèrent ensemble une liberté de mouvement au roulement supplémentaire par rapport à la structure de jante. En particulier :
- le roulement supplémentaire en position de contact supplémentaire est libre de pivoter autour d'un axe de basculement supplémentaire coplanaire avec les axes de glissement supplémentaire et perpendiculaire aux axes de glissement supplémentaire et/ou
- le roulement supplémentaire en position de contact supplémentaire est libre de pivoter autour d'un axe de pivotement supplémentaire sécant avec l'axe de rotation du roulement supplémentaire.

Suivant un mode de réalisation, la structure de guidage comporte un dispositif de butée supplémentaire qui comporte au moins une première butée supplémentaire solidaire du roulement supplémentaire en regard d'une première contrebutée supplémentaire solidaire de la structure de jante, la première butée supplémentaire et la première contrebutée supplémentaire étant, dans une première position de contact supplémentaire, en contact suivant une première zone de contact supplémentaire pour limiter un mouvement de translation du roulement supplémentaire par rapport à la structure de jante parallèlement aux axes de glissement dans un premier sens de translation, la butée supplémentaire et la contrebutée supplémentaire étant, dans une position de contact supplémentaire, en contact suivant une zone de contact telle que : la zone de contact est située à moins de 10cm d'un plan contenant les axes de glissement et/ou la zone de contact est située à moins de 10cm d'un plan médian entre les deux axes de glissement

Selon un mode de réalisation, la nacelle comporte une partie centrale en forme de barillet et deux parties latérales en forme d'ogive, les premières pistes de roulement étant montées à la liaison entre la partie centrale et les parties latérales.

### BRÈVE DESCRIPTION DES FIGURES

D'autres caractéristiques et avantages de l'invention ressortiront à la lecture de la description qui va suivre, en référence à la figure annexée et détaillée ci-après.
[Fig. 1] La figure 1 est une vue en perspective d'une partie d'une installation de grande roue selon un mode de réalisation de l'invention, permettant notamment de visualiser une jante de grande roue, une nacelle et une structure de guidage de la nacelle.
[Fig. 2] La figure 2 est une vue de face d'un détail de la structure de guidage.

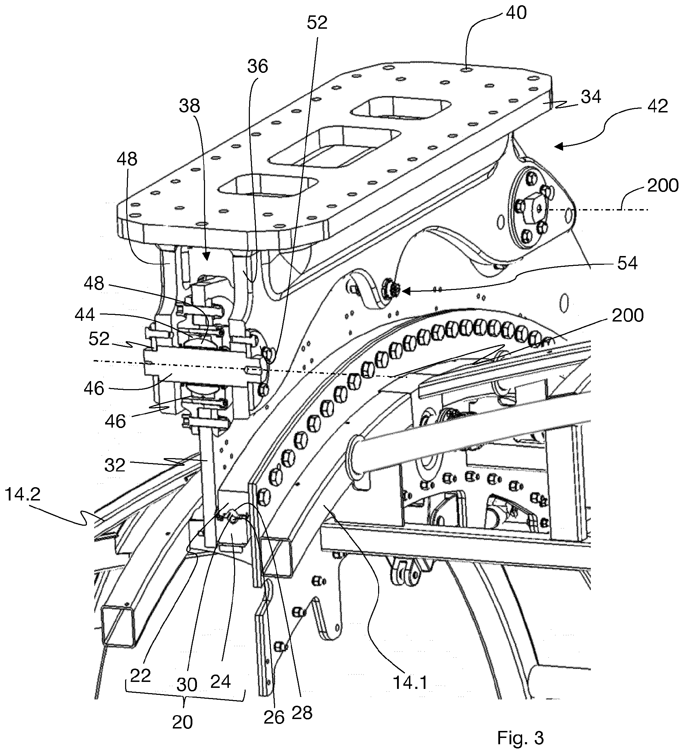

[Fig. 3] La figure 3 est une vue en perspective et en coupe d'un détail de la structure guidage.
[Fig. 4] La figure 4 est une vue en coupe d'une liaison à rotule glissante de la structure de guidage, suivant un plan de coupe C illustré sur la figure 3.
[Fig. 5] La figure 5 est une vue en coupe d'un dispositif de butée de la structure de guidage, suivant un plan de coupe S illustré sur la figure 3.
[Fig. 6] La figure 6 est une vue en coupe d'un dispositif de butée supplémentaire de la structure de guidage.

Pour plus de clarté, les éléments identiques ou similaires sont repérés par des signes de référence identiques dans le texte et sur la figure. Le mode réalisation de l'invention, illustré par les figures annexées et décrit ci-après, n'est donné qu'à titre d'exemple non limitatif.

### DESCRIPTION DÉTAILLÉE DE MODES DE RÉALISATION

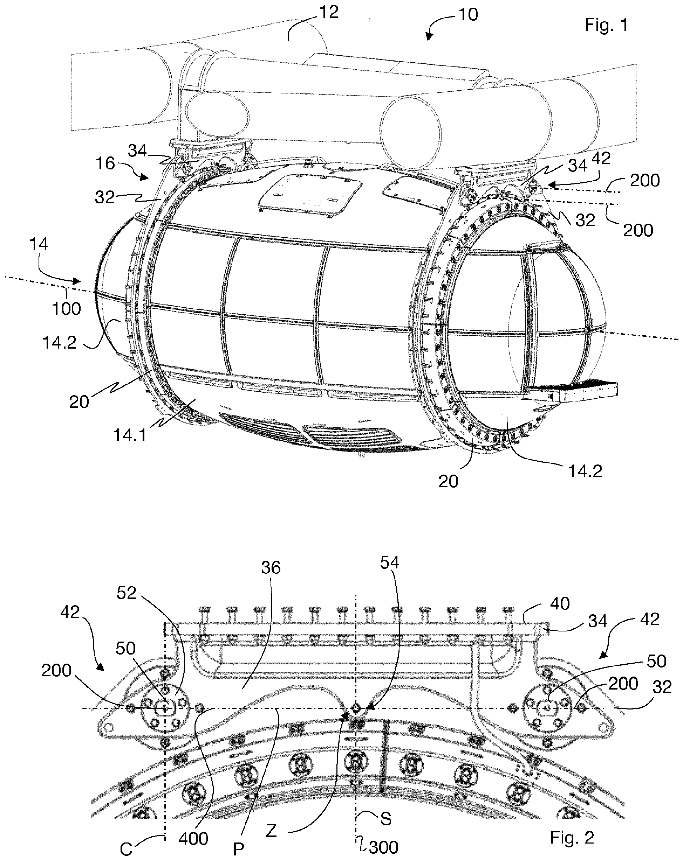

Sur la figure 1 est illustrée une partie d'une installation de grande roue **10** comprenant une structure de jante **12** mobile en rotation autour d'un axe de révolution horizontal, et une nacelle **14** liée à la structure de jante **12** par l'intermédiaire d'une structure de guidage **16** pour tourner par rapport à la structure de jante **12** autour d'un axe de rotation parallèle à l'axe de révolution de la structure de jante **12** et distant de l'axe de révolution de la structure de jante **12.**

À titre illustratif, la nacelle **14** peut présenter une structure oblongue formée par exemple d'une partie centrale **14.1** formant un barillet, encadrée par deux parties d'extrémité **14.2** en forme d'ogive. La nacelle **14** illustrée est de grandes dimensions et permet d'accueillir un nombre important de passagers, une dizaine ou davantage, en position assise ou debout.

La structure de guidage **16** de la nacelle **14** comporte au moins un roulement **20,** et de préférence deux roulements **20** qui sont situés dans des plans distants l'un de l'autre, idéalement parallèles, de sorte que les axes de rotation **100** des roulements sont idéalement confondus et définissent ensemble l'axe de rotation de la nacelle. Dans l'exemple de réalisation, chacun des roulements **20** est situé dans le plan de jonction entre la partie centrale en barillet **14.1** et l'une des parties d'extrémité en ogive **14.2** de la structure de la nacelle **14**, et présente un diamètre supérieur à **1,5** mètre, et de préférence supérieur à **2** mètres.

Chaque roulement **20** comporte deux bagues de roulement **22, 24** formant des pistes de roulement **26**, **28** opposées sur lesquelles roulent des corps roulants **30** pour guider un mouvement de rotation relatif entre les deux pistes de roulement **26**, **28** autour de l'axe de rotation **100** du roulement **20**. Plus spécifiquement, une première bague **22** formant une première piste de roulement **26** est solidarisée à la nacelle **10**, alors que la deuxième bague **24** formant la deuxième piste **28** est solidarisée à un support **32** lié à une platine **34** solidaire de la structure de jante **12**. En variante, le support **32** et la bague **24** peuvent ne former qu'une pièce.

La platine **34** est de préférence monobloc pour avoir des dimensions parfaitement maîtrisées, et comporte par exemple deux flasques parallèles **36** qui délimitent entre eux un logement intercalaire **38** dans lequel est logée une portion du support **32**. La platine **34** présente une interface de fixation **40** au corps de la structure de jante **12**.

La liaison cinématique entre la platine **34** et le support **32** est réalisée par deux liaisons à rotule glissante **42** ayant des axes de glissement **200** parallèles et distants l'un de l'autre. Dans le contexte de l'invention, une liaison à rotule glissante est une liaison mécanique assurant trois degrés de liberté de rotation autour d'un centre de rotation ainsi qu'un degré de liberté de translation du centre de rotation le long d'un axe de glissement. Pour certaines applications, les mouvements selon les degrés de liberté de rotation peuvent le cas échéant être de très faible amplitude, par exemple inférieure à **5**°. Le degré de liberté de translation peut être quant à lui de l'ordre de **20** mm. Ces valeurs sont toutefois données à titre indicatif, car elles sont susceptibles de varier considérablement suivant les défauts géométriques observés pour la structure de la capsule, ou les dimensions de la capsule et des roulements. De plus grands débattements ne sont pas exclus. Les axes de glissement **200** des deux liaisons à rotule glissante **42** sont de préférence parallèles à l'axe de rotation **100** du roulement **20** qu'elles supportent, au moins dans une position médiane de référence de la structure de guidage **16**. Ces liaisons à rotule glissante **42** sont logées entre les deux flasques **36** parallèles de la platine **34**.

Chaque liaison à rotule glissante **42** comporte par exemple une bague **44** logée dans une chape **46** fixée au support **32** et destinée à recevoir une rotule lisse **48** au moins partiellement sphérique coulissant sur un axe matérialisé par exemple par une cheville **50** solidarisée aux deux flasques parallèles **36**, par exemple par l'intermédiaire de deux brides **52**. La bague **36**, solidaire de la chape **46**, présente une piste de glissement concave d'enveloppe sphérique et de profil complémentaire au profil extérieur de la rotule lisse **48**, de manière à pouvoir tourner autour du centre de la rotule **48**, qui peut lui-même se déplacer le long de l'axe **200** de la cheville **50**.

Les axes de glissement **200** définis par les chevilles **40** sont parallèles. Chaque liaison à rotule glissante **42** confère à la fixation entre le support **32** et la platine **34** trois degrés de liberté de rotation et un degré de liberté de translation parallèlement à l'axe **200** de la cheville **50**, qui permettent de rattraper les décalages éventuels entre les supports **32** ou entre les axes de rotation **100** des deux roulements **20**.

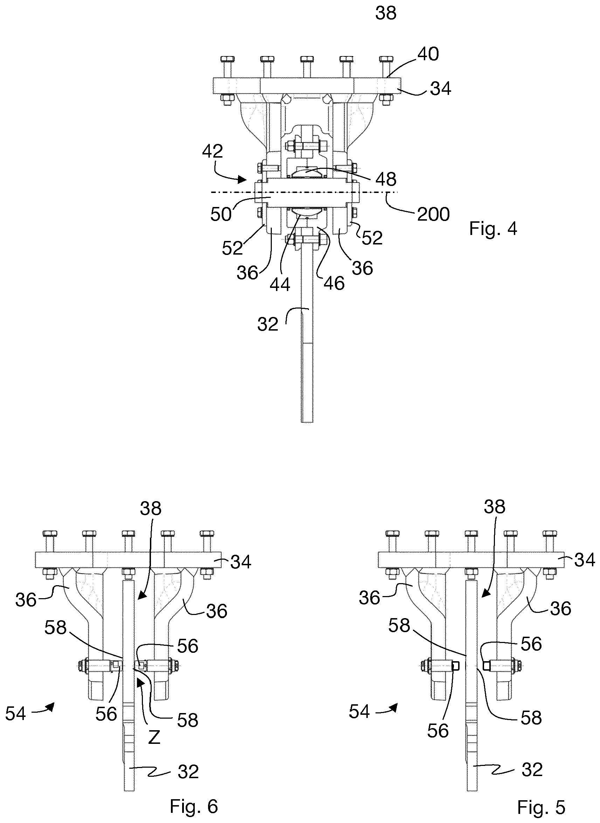

La structure de guidage **16** comporte, pour l'un des supports **32** au moins, et ici pour les deux supports **32**, un dispositif de butée **54**, logé de préférence entre les deux flasques **36** de la platine **34**. Chaque dispositif de butée **54** (l'un d'entre eux étant illustré sur la figure 5 et l'autre sur la figure 6) comporte deux butées **56** solidaires d'un des flasques **36** de la platine **34**, chacune en regard d'une contrebutée **58** solidaire du support 32, et par cet intermédiaire solidaire de la structure de jante **12**. Une première des butées **56** entre en contact avec la contrebutée **58** qui lui fait face dans une première position de contact, pour limiter un mouvement de translation du support **32** par rapport à la structure de jante **23** parallèlement aux axes de glissement **200** dans un premier sens de translation. De façon similaire, la deuxième des butées **56** entre en contact avec la contrebutée **58** qui lui fait face dans une deuxième position de contact, pour limiter un mouvement de translation du support **32** par rapport à la structure de jante **12** parallèlement aux axes de glissement **200** dans un deuxième sens de translation opposé au premier.

Dans chacune des positions de contact, la zone de contact **Z** (indiquée sur la figure 2) entre la butée **56** concernée et la contrebutée **58** correspondante est positionnée approximativement à mi-chemin entre les liaisons à rotule glissante **42**. Pour fixer les idées, le centre de chaque zone de contact **Z** se trouve de préférence à moins de **10**cm d'un plan **P** contenant les axes de glissement et de préférence à moins de **10**cm d'un plan médian de symétrie **S** entre les deux axes de glissement **200**.

Dans ce mode de réalisation où chaque support **32** est associé à un dispositif de butée **54**, on peut prévoir que pour l'un des deux supports **32** au moins, les butées **56** et contrebutées **58** sont disposées de façon à ce que la première position de contact ne soit pas confondue avec la deuxième position de contact comme illustré sur la figure 5, en d'autres termes de façon à ce que le support **32** soit mobile en translation par rapport à la platine **34** parallèlement aux axes de glissement **200** sur quelques millimètres entre la première position de contact et la deuxième position de contact. Le support **32** correspondant est alors libre de se mouvoir en translation par rapport à la structure de jante **12** parallèlement aux axes de glissement **200**, de pivoter autour d'un axe imaginaire de pivotement **300** perpendiculaire au plan **P** contenant les axes de glissement et sécant avec l'axe de rotation du roulement **100**, et de pivoter autour d'un axe imaginaire de basculement **400** passant par les centres de rotation des liaisons à rotule glissante **42**.

Pour l'autre support **32**, la première position de contact et la deuxième position de contact sont de préférence confondues, comme illustré sur la figure 6, de sorte que toute translation du support **32** par rapport à la structure de jante **12** est interdite.

Les liaisons à rotule glissante **42** permettent de rattraper les défauts d'alignement, notamment entre les deux roulements **20**, pour réduire l'hyperstatisme de l'installation et minimiser les contraintes mécaniques. Les dispositifs de butées **54** permettent quant à eux de limiter les débattements axiaux de la nacelle **14** à ce qui est nécessaire pour compenser les défauts d'alignement, et de reprendre les efforts axiaux, dus par exemple au vent.

Chaque dispositif de butée **54** peut être ajusté suivant les besoins, en augmentant ou réduisant, voire en annulant le débattement axial correspondant.

Suivant une variante non représentée, un seul des deux supports **32** est lié à la structure de jante par des liaisons à rotule glissante **42**, l'autre support **32** n'ayant pas de degré de liberté.

Suivant une autre variante, la structure de guidage **16** est équipée d'une platine unique pour assurer la liaison des deux supports **32** à la structure de jante **12**.

## Revendications

1. Installation de grande roue (10) comprenant une structure de jante (12) mobile en rotation autour d'un axe de révolution horizontal, et au moins une nacelle (14) liée à la structure de jante (12) par l'intermédiaire d'une structure de guidage (16) comportant au moins un roulement (20) définissant un axe de rotation (100), le roulement comportant au moins deux pistes de roulement (26, 28) opposées guidées l'une par rapport à l'autre en rotation autour de l'axe de rotation (100) du roulement (20), une première (26) des deux pistes de roulement étant solidaire de la nacelle (14) et une deuxième (28) des deux pistes étant solidaire d'un support (32), **caractérisée en ce que** le support (20) est lié à la structure de jante (12) par deux liaisons à rotule glissante (42) ayant des axes de glissement (200) parallèles l'un à l'autre et distants l'un de l'autre.

2. Installation de grande roue (10) selon la revendication 1, **caractérisée en ce que** dans une position médiane de référence, l'axe de rotation (100) du roulement (20) est parallèle aux axes de glissement (200) des liaisons à rotule glissante (42).

3. Installation de grande roue (10) selon la revendication 2, **caractérisée en ce que** dans la position médiane de référence, l'axe de rotation (100) du roulement (20) est équidistant des axes de glissement (200).

4. Installation de grande roue (10) selon l'une quelconque des revendications précédentes, **caractérisée en ce que** la structure de guidage (16) comporte un dispositif de butée (54) qui comporte au moins une première butée (56) solidaire de la structure de jante (12) en regard d'une première contrebutée (58) solidaire du roulement (20), la première butée (56) et la première contrebutée (58) étant, dans une première position de contact, en contact suivant une première zone de contact (Z) pour limiter un mouvement de translation du roulement (20) par rapport à la structure de jante (12) parallèlement aux axes de glissement (200) dans un premier sens de translation.

5. Installation de grande roue (10) selon la revendication 4, **caractérisée en ce que** la première zone de contact (Z) présente un centre situé à moins de 10cm d'un plan (P) contenant les axes de glissement (200) et/ou à moins de 10cm d'un plan médian (S) entre les deux axes de glissement (200).

6. Installation de grande roue (10) selon l'une quelconque des revendications 4 à 5, **caractérisée en ce que** le dispositif de butée comporte au moins une deuxième butée (56) solidaire de la structure de jante (12) en regard d'une deuxième contrebutée (58) solidaire du roulement (20), la deuxième butée (56) et la deuxième contrebutée (58) étant, dans une deuxième position de contact, en contact pour limiter un mouvement de translation du roulement (20) par rapport à la structure de jante (12) parallèlement aux axes de glissement (200) dans un deuxième sens de translation opposé au premier sens de translation.

7. Installation de grande roue (10) selon la revendication 6, **caractérisée en ce que** le dispositif de butée (54) permet une translation du roulement (20) par rapport à la structure de jante (12), parallèlement à l'axe de rotation (100) du roulement, avec un débattement axial entre la première position de contact et la deuxième position de contact.

8. Installation de grande roue (10) selon la revendication 6, **caractérisée en ce que** la première position de contact est confondue avec la deuxième position de contact, le dispositif de butée (54) interdisant toute translation axiale du roulement (20) par rapport à la structure de jante (12) parallèlement à l'axe de rotation (100) du roulement.

9. Installation de grande roue (10) selon l'une quelconque des revendications précédentes, **caractérisée en ce que** la structure de guidage (16) comporte au moins un roulement supplémentaire (20) définissant un axe de rotation (100), le roulement supplémentaire (20) étant à une distance du roulement (20), mesurée parallèlement à l'axe de rotation du roulement (100), supérieure à 1 mètre, le roulement supplémentaire (20) comportant au moins deux pistes de roulement supplémentaires opposées guidées l'une par rapport à l'autre en rotation autour de l'axe de rotation du roulement supplémentaire, une première des deux pistes de roulement supplémentaires étant solidaire de la nacelle (14) et une deuxième des deux pistes de roulement supplémentaires étant solidaire d'un support (32) lié à la structure de jante par les liaisons à rotule glissante supplémentaires.

10. Installation de grande roue (10) selon la revendication 9, **caractérisée en ce que** le roulement supplémentaire (20) est lié à la structure de jante (12) par deux liaisons à rotule glissante (42) supplémentaires ayant des axes de glissement (200) parallèles et distants l'un de l'autre.

11. Installation de grande roue (10) selon la revendication 10, **caractérisée en ce que** les axes de glissement (200) des deux liaisons à rotule glissante supplémentaires (42) sont parallèles à l'axe de rotation (100) du roulement supplémentaire (20).

12. Installation de grande roue (10) selon l'une quelconque des revendications 10 à 11, **caractérisée en ce que** la structure de guidage (16) comporte un dispositif de butée supplémentaire (54) qui comporte au moins une première butée supplémentaire (56) solidaire de la structure de jante (12) en regard d'une première contrebutée supplémentaire (58) solidaire du roulement supplémentaire (20), la première butée supplémentaire (56) et la première contrebutée supplémentaire (58) étant, dans une première position de contact supplémentaire, en contact pour limiter un mouvement de translation du roulement supplémentaire (20) par rapport à la structure de jante (12) parallèlement aux axes de glissement (200) dans un premier sens de translation.

13. Installation de grande roue (10) selon la revendication 12, **caractérisée en ce que** le dispositif de butée supplémentaire (54) permet une translation axiale, parallèlement à l'axe de rotation (100) du roulement supplémentaire (20), du roulement supplémentaire (20) par rapport à la structure de jante (12).

14. Installation de grande roue (10) selon la revendication 12, **caractérisée en ce que** le dispositif de butée supplémentaire (54) interdit toute translation axiale, parallèlement à l'axe de rotation (100) du roulement supplémentaire (20), du roulement supplémentaire (20) par rapport à la structure de jante (12).

15. Installation de grande roue (10) selon l'une quelconque des revendications précédentes, **caractérisée en ce que** le roulement (20) a un diamètre primitif supérieur à 1,5 mètres, et de préférence supérieur à 2 mètres.

## Patentansprüche

1. Riesenradanlage (10), umfassend eine Felgenstruktur (12), die um eine horizontale Drehachse herum drehbar ist, und mindestens eine Gondel (14), die mit der Felgenstruktur (12) über eine Führungsstruktur (16) verbunden ist, die mindestens ein Lager (20) aufweist, das eine Drehachse (100) definiert, wobei das Lager mindestens zwei gegenüberliegende Laufbahnen (26, 28) aufweist, die relativ zueinander um die Drehachse (100) des Lagers (20) herum drehbar geführt sind, wobei eine erste (26) der zwei Laufbahnen mit der Gondel (14) fest verbunden ist und eine zweite (28) der zwei Bahnen mit einem Träger (32) fest verbunden ist, **dadurch gekennzeichnet, dass** der Träger (20) mit der Felgenstruktur (12) durch zwei Gleitkugelgelenkverbindungen (42) verbunden ist, die Gleitachsen (200) besitzen, die parallel zueinander und voneinander entfernt sind.

2. Riesenradanlage (10) nach Anspruch 1, **dadurch gekennzeichnet, dass** in einer mittleren Referenzposition die Drehachse (100) des Lagers (20) parallel zu den Gleitachsen (200) der Gleitkugelgelenkverbindungen (42) ist.

3. Riesenradanlage (10) nach Anspruch 2, **dadurch gekennzeichnet, dass** in der mittleren Referenzposition die Drehachse (100) des Lagers (20) abstandsgleich zu den Gleitachsen (200) ist.

4. Riesenradanlage (10) nach einem der vorstehenden Ansprüche,
**dadurch gekennzeichnet, dass** die Führungsstruktur (16) eine Anschlagvorrichtung (54) aufweist, die mindestens einen ersten Anschlag (56), der mit der Felgenstruktur (12) fest verbunden ist, gegenüber einem ersten Gegenanschlag (58) aufweist, der mit dem Lager (20) fest verbunden ist, wobei der erste Anschlag (56) und der erste Gegenanschlag (58) in einer ersten Kontaktposition entlang einer ersten Kontaktzone (Z) zum Begrenzen einer Translationsbewegung des Lagers (20) relativ zu der Felgenstruktur (12) parallel zu den Gleitachsen (200) in einer ersten Translationsrichtung in Kontakt stehen.

5. Riesenradanlage (10) nach Anspruch 4, **dadurch gekennzeichnet, dass** die erste Kontaktzone (Z) einen Mittelpunkt vorweist, der weniger als 10 cm von einer Ebene (P), die die Gleitachsen (200) enthält, und/oder weniger als 10 cm von einer mittleren Ebene (S) zwischen den zwei Gleitachsen (200) gelegen ist.

6. Riesenradanlage (10) nach einem der Ansprüche 4 bis 5,
**dadurch gekennzeichnet, dass** die Anschlagvorrichtung mindestens einen zweiten Anschlag (56), der mit der Felgenstruktur (12) fest verbunden ist, gegenüber einem zweiten Gegenanschlag (58) aufweist, der mit dem Lager (20) fest verbunden ist, wobei der zweite Anschlag (56) und der zweite Gegenanschlag (58) in einer zweiten Kontaktposition zum Begrenzen einer Translationsbewegung des Lagers (20) relativ zu der Felgenstruktur (12) parallel zu den Gleitachsen (200) in einer zweiten Translationsrichtung entgegengesetzt zu der ersten Translationsrichtung in Kontakt stehen.

7. Riesenradanlage (10) nach Anspruch 6, **dadurch gekennzeichnet, dass** die Anschlagvorrichtung (54) eine Translation des Lagers (20) relativ zu der Felgenstruktur (12) parallel zu der Drehachse (100) des Lagers mit einem axialen Spielraum zwischen der ersten Kontaktposition und der zweiten Kontaktposition ermöglicht.

8. Riesenradanlage (10) nach Anspruch 6, **dadurch gekennzeichnet, dass** die erste Kontaktposition mit der zweiten Kontaktposition zusammenfällt, wobei die Anschlagvorrichtung (54) jegliche axiale Translation des Lagers (20) relativ zu der Felgenstruktur (12) parallel zu der Drehachse (100) des Lagers verhindert.

9. Riesenradanlage (10) nach einem der vorstehenden Ansprüche,
**dadurch gekennzeichnet, dass** die Führungsstruktur (16) mindestens ein zusätzliches Lager (20) aufweist, das eine Drehachse (100) definiert, wobei das zusätzliche Lager (20) in einem Abstand von dem Lager (20), gemessen parallel zu der Drehachse des Lagers (100), von mehr als 1 Meter liegt, wobei das zusätzliche Lager (20) mindestens zwei gegenüberliegende zusätzliche Laufbahnen aufweist, die relativ zueinander um die Drehachse des zusätzlichen Lagers herum drehbar geführt werden, wobei eine erste der zwei zusätzlichen Laufbahnen mit der Gondel (14) fest verbunden ist und eine zweite der zwei zusätzlichen Laufbahnen mit einem Träger (32) fest verbunden ist, der durch die zusätzlichen Gleitkugelgelenkverbindungen mit der Felgenstruktur verbunden ist.

10. Riesenradanlage (10) nach Anspruch 9, **dadurch gekennzeichnet, dass** das zusätzliche Lager (20) mit der Felgenstruktur (12) durch zwei zusätzliche Gleitkugelgelenkverbindungen (42) verbunden ist, die parallele und voneinander entfernte Gleitachsen (200) besitzen.

11. Riesenradanlage (10) nach Anspruch 10, **dadurch gekennzeichnet, dass** die Gleitachsen (200) der zwei zusätzlichen Gleitkugelgelenkverbindungen (42) parallel zu der Drehachse (100) des zusätzlichen Lagers (20) sind.

12. Riesenradanlage (10) nach einem der Ansprüche 10 bis 11,
**dadurch gekennzeichnet, dass** die Führungsstruktur (16) eine zusätzliche Anschlagvorrichtung (54) aufweist, die mindestens einen ersten zusätzlichen Anschlag (56), der mit der Felgenstruktur (12) fest verbunden ist, gegenüber einem ersten zusätzlichen Gegenanschlag (58) aufweist, der mit dem zusätzlichen Lager (20) fest verbunden ist, wobei der erste zusätzliche Anschlag (56) und der erste zusätzliche Gegenanschlag (58) in einer ersten zusätzlichen Kontaktposition zum Begrenzen einer Translationsbewegung des zusätzlichen Lagers (20) relativ zu der Felgenstruktur (12) parallel zu den Gleitachsen (200) in einer ersten Translationsrichtung in Kontakt sind.

13. Riesenradanlage (10) nach Anspruch 12, **dadurch gekennzeichnet, dass** die zusätzliche Anschlagvorrichtung (54) eine axiale Translation, parallel zu der Drehachse (100) des zusätzlichen Lagers (20), des zusätzlichen Lagers (20) relativ zu der Felgenstruktur (12) ermöglicht.

14. Riesenradanlage (10) nach Anspruch 12, **dadurch gekennzeichnet, dass** die zusätzliche Anschlagvorrichtung (54) jegliche axiale Translation, parallel zu der Drehachse (100) des zusätzlichen Lagers (20), des zusätzlichen Lagers (20) relativ zu der Felgenstruktur (12) verhindert.

15. Riesenradanlage (10) nach einem der vorstehenden Ansprüche, **dadurch gekennzeichnet, dass** das Lager (20) einen wirksamen Durchmesser von mehr als 1,5 Meter und vorzugsweise mehr als 2 Meter aufweist.

## Claims

1. A Ferris wheel installation (10) comprising a rim structure (12) which is rotatable about a horizontal axis of revolution, and at least one gondola (14) which is connected to the rim structure (12) via a guide structure (16) comprising at least one bearing (20) which defines an axis of rotation (100), the bearing comprising at least two opposing raceways (26, 28) which are guided, relative to one another, so as to rotate about the axis of rotation (100) of the bearing (20), a first (26) of the two raceways being rigidly connected to the gondola (14), and a second (28) of the two raceways being rigidly connected to a support (32), **characterized in that** the support (20) is connected to the rim structure (12) by two sliding ball joints (42) having slide axes (200) which are parallel to one another and remote from one another.

2. The Ferris wheel installation (10) according to claim 1,
**characterized in that** in a median reference position, the axis of rotation (100) of the bearing (20) is parallel to the slide axes (200) of the sliding ball joints (42).

3. The Ferris wheel installation (10) according to claim 2,
**characterized in that** in the median reference position, the axis of rotation (100) of the bearing (20) is equidistant from the slide axes (200).

4. The Ferris wheel installation (10) according to any one of the preceding claims, **characterized in that** the guide structure (16) comprises a stop device (54) which comprises at least one first stop (56) which is rigidly connected to the rim structure (12) opposite a first counter-stop (58) which is rigidly connected to the bearing (20), the first stop (56) and the first counter-stop (58) being, in a first contact position, in contact according to a first contact zone (Z) so as to limit a translational movement of the bearing (20) with respect to the rim structure (12), parallel to the slide axes (200), in a first direction of translation.

5. The Ferris wheel installation (10) according to claim 4,
**characterized in that** the first contact zone (Z) has a center that is located at less than 10 cm from a plane (P) containing the slide axes (200), or at less than 10 cm from a median plane (S) between the two slide axes (200).

6. The Ferris wheel installation (10) according to either one of claims 4 and 5, **characterized in that** the stop device comprises at least one second stop (56) which is rigidly connected to the rim structure (12) opposite a second counter-stop (58) which is rigidly connected to the bearing (20), the second stop (56) and the second counter-stop (58) being, in a second contact position, in contact so as to limit a translational movement of the bearing (20) with respect to the rim structure (12), parallel to the slide axes (200), in a second direction of translation opposite the first direction of translation.

7. The Ferris wheel installation (10) according to claim 6,
**characterized in that** the stop device (54) allows for a translation of the bearing (20), with respect to the rim structure (12), parallel to the axis of rotation (100) of the bearing, having an axial clearance between the first contact position and the second contact position.

8. The Ferris wheel installation (10) according to claim 6,
**characterized in that** the first contact position is coincident with the second contact position, the stop device (54) prohibiting any axial translation of the bearing (20), with respect to the rim structure (12), parallel to the axis of rotation (100) of the bearing.

9. The Ferris wheel installation (10) according to any one of the preceding claims, **characterized in that** the guide structure (16) comprises at least one additional bearing (20) which defines an axis of rotation (100), the additional bearing (20) being at a distance from the bearing (20), measured parallel to the axis of rotation of the bearing (100), of more than 1 meter, the additional bearing (20) comprising at least two additional opposing raceways which are guided, relative to one another, so as to rotate about the axis of rotation of the additional bearing, a first of the two additional raceways being rigidly connected to the gondola (14), and a second of the two additional raceways being rigidly connected to a support (32) which is connected to the rim structure by the additional sliding ball joints.

10. The Ferris wheel installation (10) according to claim 9,
**characterized in that** the additional bearing (20) is connected to the rim structure (12) by two additional sliding ball joints (42) which have slide axes (200) which are parallel to one another and spaced apart from one another.

11. The Ferris wheel installation (10) according to claim 10,
**characterized in that** the slide axes (200) of the two additional sliding ball joints (42) are parallel to the axis of rotation (100) of the additional bearing (20).

12. The Ferris wheel installation (10) according to either one of claims 10 and 11, **characterized in that** the guide structure (16) comprises an additional stop device (54) which comprises at least one first additional stop (56) which is rigidly connected to the rim structure (12) opposite a first additional counter-stop (58) which is rigidly connected to the additional bearing (20), the first additional stop (56) and the first additional counter-stop (58) being, in a first contact position, in contact so as to limit a translational movement of the additional bearing (20) with respect to the rim structure (12), parallel to the slide axes (200), in a first direction of translation.

13. The Ferris wheel installation (10) according to claim 12,
**characterized in that** the additional stop device (54) allows for an axial translation, parallel to the axis of rotation (100) of the additional bearing (20), of the additional bearing (20) with respect to the rim structure (12).

14. The Ferris wheel installation (10) according to claim 12,
**characterized in that** the additional stop device (54) prohibits any axial translation, parallel to the axis of rotation (100) of the additional bearing (20), of the additional bearing (20) with respect to the rim structure (12).

15. The Ferris wheel installation (10) according to any one of the preceding claims, **characterized in that** the bearing (20) has a pitch diameter greater than 1.5 meters, preferably greater than 2 meters.
